# EUROPEAN PATENT APPLICATION

(11) **EP 3 200 007 A1**
(43) Date of publication of application: **02.08.2017**
(21) Application number: 16168321.4
(22) Date of filing: 04.05.2016
(51) Int. Cl.: G02B 27/01, G02B 27/04, G02B 27/22, G02B 7/22

(54) **A PORTABLE FOLDING VIRTUAL REALITY GLASSES WITH ADJUSTABLE FOCUS**

(30) Priority: 29.01.2016 CN 201610061315; 29.01.2016 CN 201620096092 U
(71) Applicant: Shenzhen D-Light Technology Corp., Ltd., Shenzhen, Guangdong (CN)
(72) Inventor: DUAN, Zhimin, Shenzhen, Guangdong (CN); YAN, Zhengtao, Shenzhen, Guangdong (CN); XU, Zugang, Shenzhen, Guangdong (CN)
(74) Representative: Karakatsanis, Georgios

(57) **Abstract**

A portable folding virtual reality glasses with adjustable focus having a headband, a first supporting piece, a second supporting piece, an accordion folding piece and an eyeshade component, inner and outer sides of the headband are adhered and connected. A terminal supporting plate is provided between the front of the headband and the first supporting piece. A first supporting piece eyehole is provided at the front of the first supporting piece. When the virtual reality glasses is unfolded, the back ends of the first supporting piece extend to the eyeshade component and adhere to the eyeshade component. The inner side of the first supporting piece is provided with the second supporting piece. The accordion type folding piece is provided between the second supporting piece and the eyeshade component. The virtual reality glasses can be completely folded through the accordion type folding piece, compressing the size in the folded state to the minimum for easy carrying. The virtual reality glasses also has a reliable structure and is comfortable to wear. It can effectively avoid a light break-in and is advantageous for promotion.

## Description

### Technical Field

The present invention relates to a portable folding virtual reality glasses with adjustable focus.

### Background Art

With the development of technology, virtual reality or 3D technology for short are gradually applied to fields such as videos, films, medicine, immersive training or games. Through 3D images and posture sensors together with electronic computer equipment, a three-dimensional virtual reality world can be created. In the virtual reality technology, a virtual world is built through electronic computers or electronic devices, and special operating media are used for users to acquire diverse sensory simulation provided by electronic computers or electronic devices, so as to achieve the effect of entering the virtual world. Also, with the rise of virtual reality technology, virtual reality glasses have been sprung up like mushrooms all over the world.

In the process of using virtual reality glasses, it is necessary to mount a terminal with display screen such as mobile phone, tablet and electronic module onto the virtual reality glasses, thereby achieving effects such as watching 3D videos, playing virtual games, and seeing tourist attractions, etc., which can make users feel as if they are actually in the scenes and immersed in the reality. However, various deficiencies exist in the virtual reality glasses of the prior arts: existing virtual reality glasses cannot be folded in different lengths according to specific needs. The focus cannot be adjusted. And for some glasses which can adjust the focus, different slots are set, and then devices such as mobile phones are fixed in different slots to achieve the purpose of focus adjustment. But this kind of structure greatly increases the size of the whole glasses. Its great size makes it difficult to store and carry. This is very inconvenient to the users. The use of virtual reality glasses has been limited; further, the folding effect of existing virtual reality glasses with folding effect is poor, and the size is rather large and therefore inconvenient to carry; also, the existing virtual reality glasses cannot tightly connect with the mobile terminal devices, and the use of projecting camera and each key is affected.

### Disclosure of the Invention

To overcome the shortcomings of the prior art, the present invention provides a portable folding virtual reality glasses with adjustable focus.

Technical scheme of the invention is as follows:
A portable folding virtual reality glasses with adjustable focus, comprising a headband, a first supporting piece, a second supporting piece, an accordion type folding piece and an eyeshade assembly.

An inner side and an outer side of the headband are adhered and connected to achieve the purpose of binding; a front portion of the headband is provided with a headband through hole.

A terminal supporting plate is provided between a front part of the headband and the first supporting piece, wherein a space formed between the headband, the terminal supporting plate and the first supporting piece is used for accommodating a terminal device.

A first supporting piece eyehole is provided at a front portion of the first supporting piece; the second supporting piece is provided adjacent to an inner side of the first supporting piece; the first supporting piece and the second supporting piece are both foldable; the first supporting piece can be divided into five sections for folding; when the virtual reality glasses is unfolded, back ends of the first supporting piece extend to the eyeshade assembly and adheres to the eyeshade assembly; the second supporting piece can be divided into three sections for folding, and a middle part of the second supporting piece is made of transparent materials.

The accordion type folding piece is provided between the second supporting piece and the eyeshade assembly. The accordion type folding piece is a hollow structure, and can be extended and retracted backward and forward.

The eyeshade assembly comprises an eyeshade supporting piece and an eyeshade provided inside the eyeshade supporting piece; the eyeshade supporting piece can be divided into three sections for folding, and the eyeshade assembly adheres and connects with the first supporting piece through the eyeshade supporting piece; an eyeshade supporting piece eyehole is provided at the eyeshade supporting piece.

Further, the outer side of the headband is provided with a headband hook tape, while the inner side of the headband is provided with several headband loop tapes at different positions; by adhering the headband hook tape with anyone of the headband loop tapes, the eyeshade assembly fits better with human eyes.

Further, the first supporting piece is made of plastic materials.

Further, an outer side of the first supporting piece is provided with first supporting piece hook tapes, while the inner side of the first supporting piece is provided with first supporting piece loop tapes.

Further, an outer side of the eyeshade supporting piece is provided with eyeshade supporting piece hook tapes; the eyeshade supporting piece adheres and connects with the first supporting piece loop tapes through the eyeshade supporting piece hook tapes.

Further, the middle part of the second supporting piece is made of transparent acrylic materials while two sides of the second supporting piece are made of plastic materials.

Further, a nose pad is provided on the eyeshade supporting piece. Further, the eyeshade supporting piece is made of plastic materials.

According to the aforementioned proposal of the invention, the present invention has the following beneficial effects: The invention is telescopic through the accordion type folding piece and easy to fold. Also, the telescopic property achieved through the accordion type folding piece requires only one slot and the object distance can then be better adjusted. The overall size of the invention is small. Focus adjustment is easy; with all components fitting with each other, complete folding can be achieved, compressing the size of the invention in the folded state to the minimum as much as possible for easy carrying; the rigid materials of each supporting piece on both sides of the invention support the whole body of the invention to achieve fixation. The headband of the invention surrounds the head in a complete circle for better fitting with the face; materials of the invention contacting with the face are soft for better fitting to prevent break in of lights; symmetrical holes of the location where the mobile phone is placed increases the adaptability of different mobile phone models. The normal use of camera and earphone jack as well as each key and jack of the mobile phone are not affected.

### Brief Description of Drawings

FIG. 1 illustrates the structure of the present invention;
FIG. 2 illustrates the front view of the headband of the present invention;
FIG. 3 illustrates the rear view of the headband of the present invention;
FIG. 4 illustrates the structure of the first supporting piece of the present invention;
FIG. 5 illustrates the front view of the first supporting piece of the present invention;
FIG. 6 illustrates the rear view of the first supporting piece of the present invention;
FIG. 7 illustrates the structure of the second supporting piece of the present invention;
FIG. 8 illustrates the structure of the eyeshade supporting piece of the present invention;
FIG. 9 illustrates the rear view of the eyeshade supporting piece of the present invention;

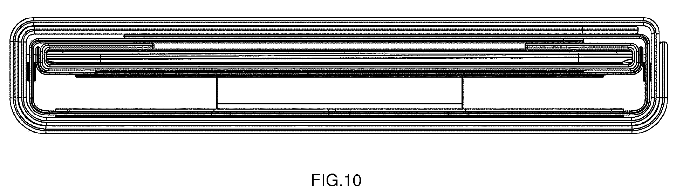

FIG. 10 illustrates the top view of the present invention when folded.

In the figures, 10. Headband; 11. Headband through hole; 12.

Headband hook tape; 13. Headband loop tapes; 20. First supporting piece; 21. First supporting piece eyehole; 22. First supporting piece hook tapes; 23. First supporting piece loop tapes; 30. Second supporting piece; 40. Accordion type folding piece; 50. Eyeshade supporting piece; 51. Eyeshade supporting piece eyehole; 52. Nose pad; 53. Eyeshade supporting piece hook tapes; 60. Eyeshade; 70. Terminal supporting plate.

### Best Mode for Carrying out the Invention

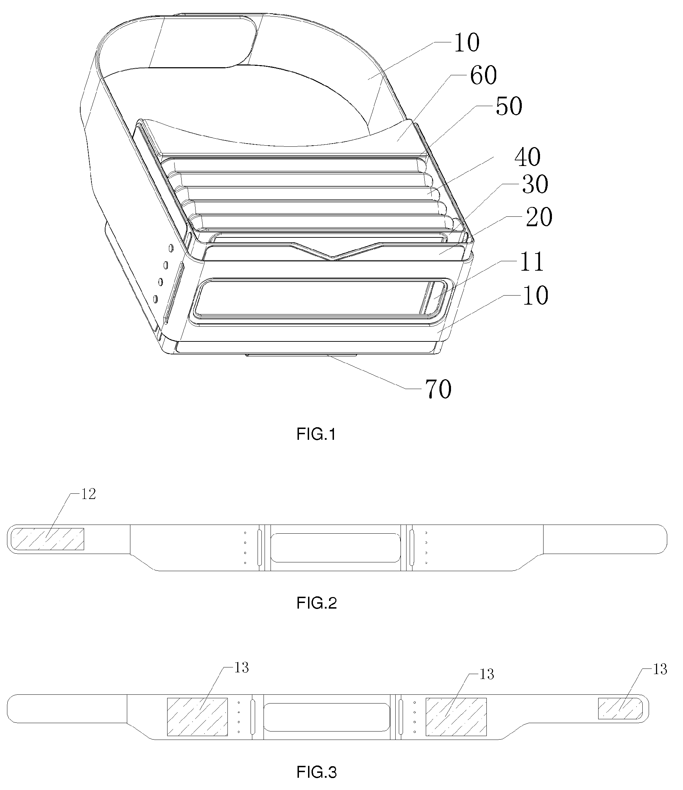

The present invention is further described in detail below with reference to the accompanying drawings and an embodiment:
As shown in FIG. 1, a portable folding virtual reality glasses with adjustable focus comprises a headband 10, a first supporting piece 20, a second supporting piece 30, an accordion type folding piece 40 and an eyeshade assembly.

As shown in FIGS. 2-3, an inner side and an outer side of the headband 10 are adhered and connected to achieve the purpose of binding. A front portion of the headband 10 is provided with a headband through hole 11. The outer side of the headband 10 is provided with a headband hook tape 12, while the inner side of the headband 10 is provided with several headband loop tapes 13 at different positions; by adhering the headband hook tape 12 with anyone of the headband loop tapes 13, the eyeshade assembly fits better with human eyes.

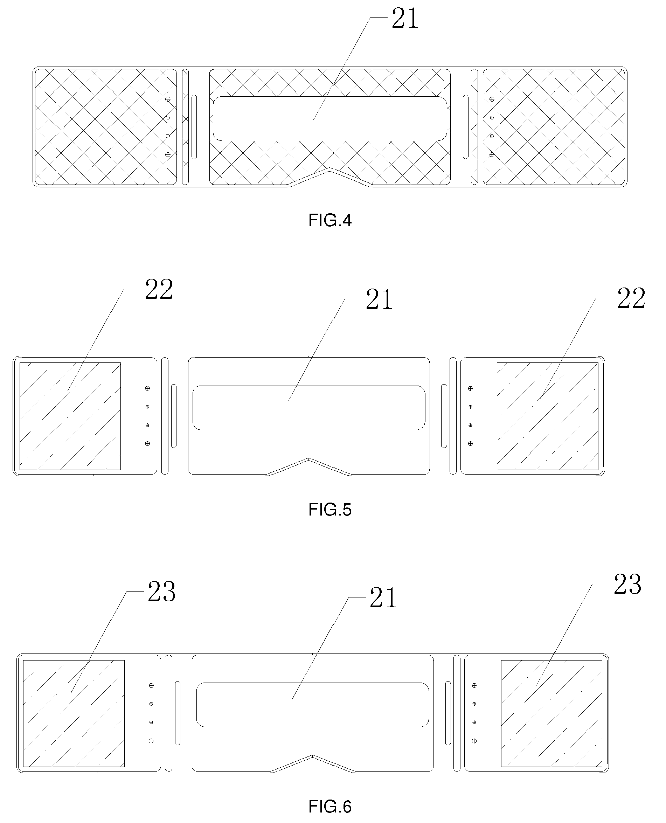

As shown in FIGS. 4-6, a first supporting piece eyehole 21 is provided at a front portion of the first supporting piece 20, and the first supporting piece 20 can be divided into five sections for folding. When the virtual reality glasses is unfolded, back ends of the first supporting piece 20 extend to the eyeshade assembly and adheres to the eyeshade assembly.

A terminal supporting plate 70 is provided between a front part of the headband 10 and the first supporting piece 20, wherein a space formed between the headband 10, the terminal supporting plate 70 and the first supporting piece 20 is used for accommodating a terminal device.

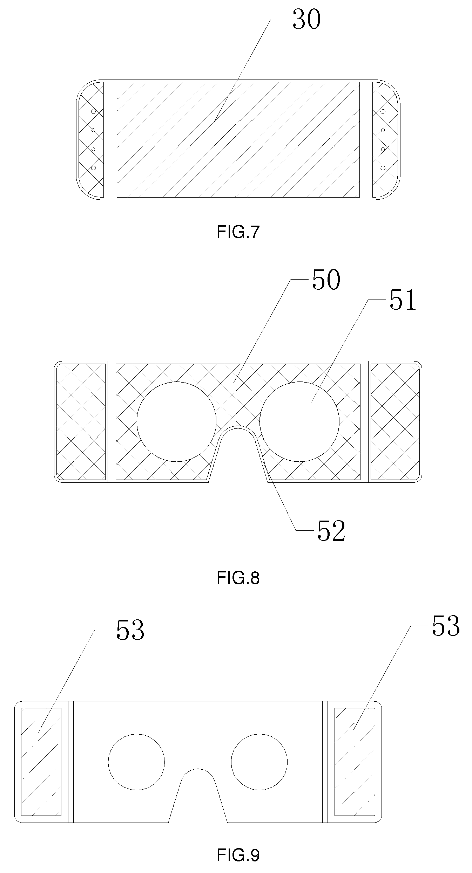

As shown in FIG. 7, the second supporting piece 30 is provided adjacent to an inner side of the first supporting piece 20. The second supporting piece 30 can be divided into three sections for folding, and a middle part of the second supporting piece 30 is made of transparent materials.

As shown in FIGS. 8-9, the eyeshade assembly comprises an eyeshade supporting piece 50 and an eyeshade 60 provided inside the eyeshade supporting piece 50; the eyeshade supporting piece 50 can be divided into three sections for folding, and the eyeshade assembly adheres and connects with the first supporting piece 20 through the eyeshade supporting piece 50; an eyeshade supporting piece eyehole 51 is provided at the eyeshade supporting piece 50; a nose pad 52 is provided on the eyeshade supporting piece 50.

An outer side of the first supporting piece 20 is provided with first supporting piece hook tapes 22, while the inner side of the first supporting piece 20 is provided with first supporting piece loop tapes 23. An outer side of the eyeshade supporting piece 50 is provided with eyeshade supporting piece hook tapes 53. Therefore, the eyeshade supporting piece 50 adheres and connects with the first supporting piece loop tapes 23 through the eyeshade supporting piece hook tapes 53.

The accordion type folding piece 40 is provided between the second supporting piece 30 and the eyeshade assembly. The accordion type folding piece 40 is a hollow structure, and can be extended and retracted backward and forward, to achieve focus adjustment.

Preferably, the first supporting piece 20 is made of plastic materials. The middle part of the second supporting piece 30 is made of transparent acrylic materials while two sides of the second supporting piece 30 are made of plastic materials. The eyeshade supporting piece 50 is made of plastic materials. The rigid materials of each supporting piece on both sides of the virtual reality glasses support the whole body of the virtual reality glasses for the purpose of fixation.

It should be understood that to those of ordinary skill in the art, modifications or variations can be made in accordance with the foregoing description, and all such modifications and variations should belong to the scope of protection of the claims attached in the present invention.

Exemplary embodiment of the invention patent has been described above in conjunction with the FIGS. It is clear that realization of the invention patent is not limited to the above methods. Various modifications based on the method and technical solutions of the present invention, or direct application of the ideas and technical solutions of the invention patent in other technical situations without modifications should also fall within the scope of protection of the present invention.

## Claims

1. A portable folding virtual reality glasses with adjustable focus, comprising a headband, a first supporting piece, a second supporting piece, an accordion type folding piece and an eyeshade assembly;
an inner side and an outer side of the headband are adhered and connected to achieve binding effect;
a terminal supporting plate is provided between a front part of the headband and the first supporting piece; a space formed between the headband, the terminal supporting plate and the first supporting piece is used for accommodating a terminal device;
a first supporting piece eyehole is provided at a front portion of the first supporting piece; the second supporting piece is provided adjacent to an inner side of the first supporting piece; the first supporting piece and the second supporting piece are both foldable;
the accordion type folding piece is provided between the second supporting piece and the eyeshade assembly, and is extendable and retractable back and forth;
the eyeshade assembly comprises an eyeshade supporting piece and an eyeshade provided inside the eyeshade supporting piece; the eyeshade assembly adheres and connects with the first supporting piece through the eyeshade supporting piece; an eyeshade supporting piece eyehole is provided at the eyeshade supporting piece.

2. The portable folding virtual reality glasses with adjustable focus as in Claim 1, wherein the outer side of the headband is provided with a headband hook tape, while the inner side of the headband is provided with several headband loop tapes at different positions; by adhering the headband hook tape with any one of the headband loop tapes, the eyeshade assembly fits with human eyes.

3. The portable folding virtual reality glasses with adjustable focus as in Claim 1, wherein the first supporting piece is made of plastic materials.

4. The portable folding virtual reality glasses with adjustable focus as in Claim 1, wherein an outer side of the first supporting piece is provided with first supporting piece hook tapes, while the inner side of the first supporting piece is provided with first supporting piece loop tapes.

5. The portable folding virtual reality glasses with adjustable focus as in Claim 4, wherein an outer side of the eyeshade supporting piece is provided with eyeshade supporting piece hook tapes; the eyeshade supporting piece adheres and connects with the first supporting piece loop tapes through the eyeshade supporting piece hook tapes.

6. The portable folding virtual reality glasses with adjustable focus as in Claim 1, wherein a middle part of the second supporting piece is made of transparent acrylic materials while two sides of the second supporting piece are made of plastic materials.

7. The portable folding virtual reality glasses with adjustable focus as in Claim 1, wherein a nose pad is provided on the eyeshade supporting piece.

8. The portable folding virtual reality glasses with adjustable focus as in Claim 1, wherein the eyeshade supporting piece is made of plastic materials.
